# EUROPEAN PATENT APPLICATION

(11) **EP 1 950 651 A1**
(43) Date of publication of application: **30.07.2008**
(21) Application number: 08000851.9
(22) Date of filing: 17.01.2008
(51) Int. Cl.: G06F 3/048

(54) **Mobile communication device and method of controlling operations of the mobile communication device**

(30) Priority: 22.01.2007 KR 20070006393
(71) Applicant: LG Electronics Inc., Seoul 150-010 (KR)
(72) Inventor: Kim, Tae Hun, Seoul, 153-801 (KR)
(74) Representative: Katérle, Axel

(57) **Abstract**

A mobile communication device and a method of controlling an operation of the mobile communication device are provided. According to an embodiment, the method includes displaying an image on at least a portion of the touch screen; if a first touch input to the touch screen is detected, displaying a first operation control menu in at least one first area on the touch screen; and if a second touch input to the touch screen is detected, displaying a second operation control menu in a second area on the touch screen. Accordingly, the present invention controls operation control menus to appear on or disappear from the touch screen in response to touch input(s) to the touch screen.

## Description

### CROSS-REFERENCE TO RELATED APPLICATION

This application claims the priority benefit of Korean Patent Application No. 10-2007-0006393, filed on January 22, 2007 in Republic of Korea, the disclosure of which is incorporated herein by reference.

### BACKGROUND OF THE INVENTION

### Field of the Invention

The present invention relates to a mobile communication device which is capable of controlling operation control menus to appear on or disappear from a touch screen in response to a touch input to the touch screen, and a method of controlling an operation of the mobile communication device.

### Description of the Related Art

Various new technologies have been widely applied to mobile communication devices such as mobile phones, personal digital assistants (PDAs), smart phones, etc. Recently, public attention has been increasingly drawn to the application of Phase change Random Access Memory (PRAM) chips as core chips and the application of ultra high pixel Complementary Metal-Oxide Semiconductor (CMOS) chips as camera modules. Future trends in the design of mobile communication devices are expected to be dominantly led by mobile communication devices equipped with full touch screens and double-sided liquid crystal displays (LCD) which can display independent images on both sides thereof.

Double-sided LCDs and full touch screens have received more and more public attention, because double-sided LCDs can help reduce the size of mobile communication devices while enabling a variety of designs and full touch screens can make keypads, which is a basic element of conventional mobile communication devices, unnecessary.

However, given that the design of mobile communication devices must ensure both portability and mobility, there is a clear limit in allocating space to user interface devices (such as displays or keypads) for mobile communication devices. More specifically, the size of touch screens for mobile communication devices is generally limited. Thus, in order for a mobile communication device to serve as both an input device and a display device at the same time using a full touch screen without a conventional keypad, it is necessary to develop efficient methods of controlling the operation of a mobile communication device.

### SUMMARY OF THE INVENTION

Accordingly, one object of the present invention is to address the above-noted and other problems and limitations associated with the related art.

Another object of the present invention is to provide a mobile communication device which is capable of controlling operation control menus to appear on or disappear from a touch screen in response to touch input(s) to the touch screen, and a method of controlling an operation of the mobile communication device.

Another object of the present invention is to allow a user to easily control a menu display operation of a touch screen provided in a mobile communication device (e.g., a mobile phone, a smart phone, a computer notebook, etc.) in a convenient manner.

To achieve these and other advantages and in accordance with the purpose of the present invention, as embodied and broadly described herein, the present invention provides, in one aspect, a method of controlling an operation of a mobile communication device equipped with a touch screen, the method including displaying an image on at least a portion of the touch screen; if a first touch input to the touch screen is detected, displaying a first operation control menu in at least one first area on the touch screen; and if a second touch input to the touch screen is detected, displaying a second operation control menu in a second area on the touch screen.

In another an aspect, the present invention a mobile communication device, including a touch screen and a control unit configured to display an image on at least a portion of the touch screen, to display a first operation control menu in at least one first area on the touch screen if a first touch input to the touch screen is detected, and to display a second operation control menu in a second area on the touch screen if a second touch input to the touch screen is detected.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:

FIGS. 1 and 2 are diagrams of the exterior of one example of a mobile communication device according to an embodiment of the present invention;

FIG. 3 is a block diagram of a mobile communication device according to an embodiment of the present invention;

FIGS. 4 and 5 are flowcharts illustrating a method of controlling an operation of a mobile communication device according to an embodiment of the present invention; and

FIGS. 6(a)-6(c) and 7(a)-7(c) illustrate examples of touch screen images for explaining the method illustrated in FIGS. 4 and 5 according to the present invention.

### DETAILED DESCRIPTION OF THE PREFERRED EMBODIMENTS

The preferred embodiments of the present invention will now be described more fully with reference to the accompanying drawings, in which exemplary embodiments of the invention are shown.

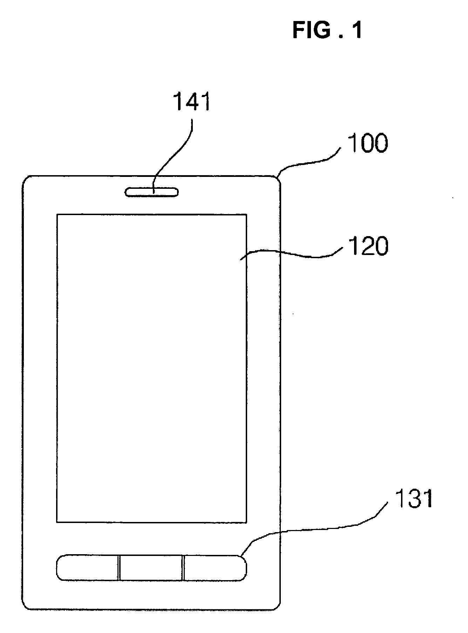

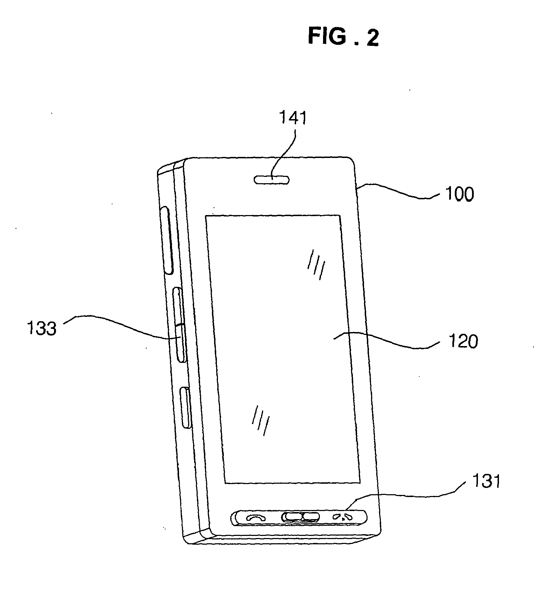

FIGS. 1 and 2 illustrate the exterior of one example of a mobile communication device 100 according to an embodiment of the present invention. Referring to FIGS. 1 and 2, the mobile communication device 100 includes a receiver 141 which is disposed on a front surface of the mobile communication device 100 and outputs a voice signal of a correspondent during a phone conversation with the correspondent or other audio sounds, a touch screen 120 which can be used as both an input device and a display device, and manipulation keys 131 which are used to receive or terminate a call or to perform other functions. Keys 133 for increasing or reducing the volume or performing camera functions may be disposed on one side of the mobile communication device 100. The mobile communication device 100 includes or can include other known components. All the components of the mobile communication device 100 are operatively configured and coupled.

The touch screen 120 is a display device which responds to a touch input from a user, e.g., a touch to the screen 120 made by the user using a finger. More specifically, the touch screen 120 allows the user to interact with the mobile communication device 100 by touching pictures, characters, and others displayed on the touch screen 120.

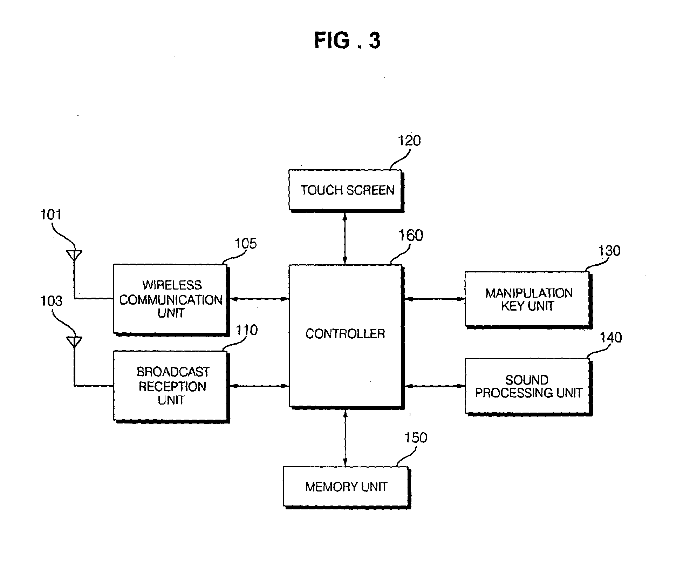

FIG. 3 is a block diagram of a mobile communication device according to an embodiment of the present invention. The mobile communication device of FIG. 3 can be the mobile communication device 100 of FIG. 1 or can be other types of mobile devices.

Referring to FIG. 3, the mobile communication device includes a wireless communication unit 105, a broadcast reception unit 110, a touch screen 120, a manipulation key unit 130, a sound processing unit 140, a memory unit 150, and a control unit 160. The mobile communication device can include other known components (e.g., a camera module, etc.) and all the components of the mobile communication device are operatively coupled and configured.

The wireless communication unit 105 provides an interface for wireless communication with a base station through an antenna 103. Further, the wireless communication unit 105 preferably includes a duplex filter for filtering a signal received through the antenna 103, a power amplifier for amplifying a transmit signal, a frequency up-convert circuit/unit in a transmission path, a frequency down-convert circuit/unit in a reception path, etc. The broadcast reception unit 110 receives a digital multimedia broadcast signal from a channel selected by a user, generates a transport stream by demodulating the received digital multimedia broadcast signal, divides the transport stream into a number of element streams such as video data, audio data, and other data, and decodes each of the element streams, thereby generating a broadcast signal that can be played back. The broadcast reception unit 110 outputs the generated broadcast signal.

The touch screen 120 serves as an input device for receiving a user's commands and data. Also, the touch screen 120 serves as a display device for displaying menus used for operating the mobile communication device and other information such as a state of a received call, battery information, etc.

The touch screen 120 can include a touch screen panel and a touch screen panel controller. The touch screen panel, which is a transparent panel attached onto the exterior of the mobile communication device, can be connected to buses in the mobile communication device. The touch screen panel determines whether the touch screen 120 has been touched. If it is determined that the touch screen 120 has been touched, the touch screen panel can transmit to the touch screen panel controller a signal corresponding to the touch input to the touch screen 120. Then, the touch screen panel controller processes the signal transmitted by the touch screen panel, and transmits data obtained by processing the signal to the control unit 160. Accordingly, the control unit 160 can determine whether there has been a touch input to the touch screen 120 and what part of the touch screen 120 has been touched based on the data transmitted by the touch screen panel controller.

The manipulation key unit 130 may include keys for making or receiving a call or for terminating a call, and receive a user command by transmitting a signal corresponding to which one of the keys is hit by the user to the control unit 160. The sound processing unit 140 may amplify a sound signal output by the control unit 160 and output the amplified signal to a speaker. Also, the sound processing unit 140 may convert a sound signal input thereto via a microphone into an electrical signal and transmit the electrical signal to the control unit 160.

The memory unit 150 stores programs and data for performing the operation of the mobile communication device and various data that the user wishes to store. The memory unit 150 may store a software driver for controlling the touch screen 120. The memory unit 150 preferably is a built-in memory, but can include both a built-in memory and a detachable memory such as a memory stick.

The control unit 160 controls the operation of the mobile communication device by controlling the wireless communication unit 105, the broadcast reception unit 110, the touch screen 120, the manipulation key unit 130, the sound processing unit 140, and the memory unit 150. More specifically, the control unit 160 controls an image to be displayed on the touch screen 120, controls a first operation control menu to be displayed in at least one first region on the touch screen 120 when a first touch input to the touch screen 120 is detected, and controls a second operation control menu to be displayed in at least one second region on the touch screen 120 when a second touch input to the touch screen 120 is detected. Here, the image is preferably a moving image, but can be a still image, icons, texts, characters, or any information or representation.

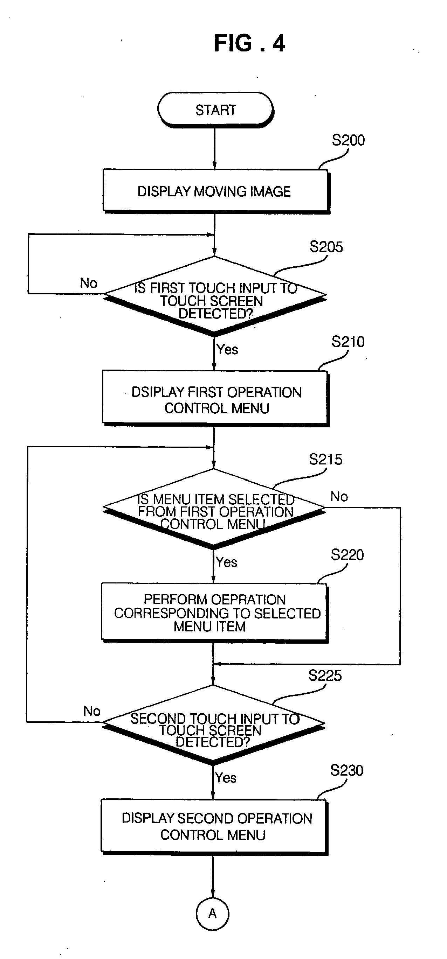

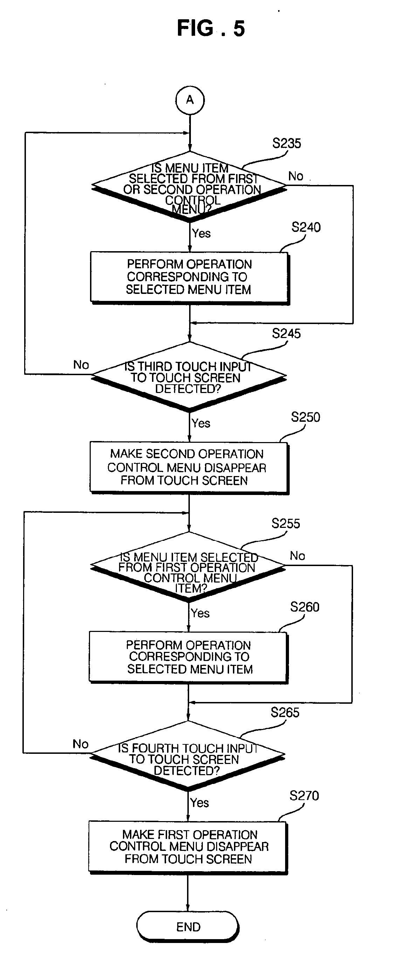

FIGS. 4 and 5 are flowcharts illustrating a method of controlling an operation of a mobile communication device according to an embodiment of the present invention. This method is discussed below as being implemented in the mobile communication device of FIG. 3, but can be implemented in other suitable device.

Referring to FIG. 4, in operation S200, when a menu for viewing a digital multimedia broadcast (DMB) program (or other type of broadcast) is selected by a user in the mobile communication device, the control unit 160 displays a moving image on the touch screen 120 of the mobile communication device.

In operation S205, the control unit 160 determines whether a first touch input to the touch screen 120 has been detected. For instance, while the image is displayed on the touch screen 120, the control unit 160 determines whether there has been a touch input to the touch screen 120 and/or what part of the touch screen 120 has been touched based on a signal transmitted by the touch screen 120. For instance, the control unit 160 may determine that the user has touched a side area (or predefined area) of the image being displayed on the touch screen.

In operation S210, if it is determined in operation S205 that the first touch input to the touch screen 120 has been detected, the control unit 160 displays a first operation control menu on the touch screen 120. As an example only, in response to the user's specific touch, the first operation control menu (e.g., a volume control menu or other designated menu) may be displayed on a designated area of the touch screen 120. The first operation control menu may be displayed on at least one of the left and right sides of the moving image.

In operation S215, the control unit 160 determines whether a menu item has been selected from the first operation control menu displayed on the touch screen 120. In operation S220, if it is determined in operation S215 that a particular menu item has been selected from the displayed first operation control menu, the control unit 160 controls an operation corresponding to the selected menu item to be performed (e.g., increasing the volume in the above example). In operation S225, the control unit 160 determines whether a second (another) touch input to the touch screen 120 has been detected. The second touch input to the touch screen 120 corresponds to a touch input to a portion of the touch screen 120 that is not occupied by the first operation control menu. For instance, while the first operation control menu is displayed in one area of the touch screen 120, the control unit 120 checks to see if a touch input to another designated area of the touch screen 120 is made.

In operation S230, if it is determined in operation S225 that the second touch input to the touch screen 120 has been detected, the control unit 160 displays a second operation control menu on the touch screen 120. As an example, the second operation control menu may be displayed at the bottom of the moving image. Thus, the user can make one or more touches to certain areas of the touch screen displaying an image, and easily cause one or more operation control menus to appear on certain areas of the touch screen 120.

In operation S235, the control unit 160 determines whether a menu item has been selected from the first operation control menu and/or the second operation control menu displayed on the touch screen 120.

In operation S240, if it is determined in operation S235 that a menu item has been selected from the first operation control menu and/or the second operation control menu, the control unit 160 controls an operation corresponding to the selected menu item to be performed.

In operation S245, the control unit 160 determines whether a third touch input to the touch screen 120 has been detected, e.g., to the touch screen that is currently displaying the first and second menus. The third touch input to the touch screen 120 corresponds to a touch input to a portion of the touch screen 120 that is occupied by neither the first operation control menu nor the second operation control menu.

In operation S250, if it is determined in operation S245 that the third touch input to the touch screen 120 has been detected, the control unit 160 controls the second operation control menu to disappear from the touch screen 120.

In operation S255, the control unit 160 determines whether a menu item has been selected from the first operation control menu. In operation S260, if it is determined in operation S255 that a menu item has been selected from the displayed first operation control menu, the control unit 160 controls an operation corresponding to the selected menu item to be performed. In operation S265, the control unit 160 determines whether a fourth touch input to the touch screen 120 has been detected. The fourth touch input to the touch screen 120 corresponds to a touch input to a portion of the touch screen 120 that is not occupied by the first operation control menu.

In operation S270, if it is determined in operation S265 that the fourth touch input to the touch screen 120 has been detected, the control unit 160 controls the first operation control menu to disappear from the touch screen 120.

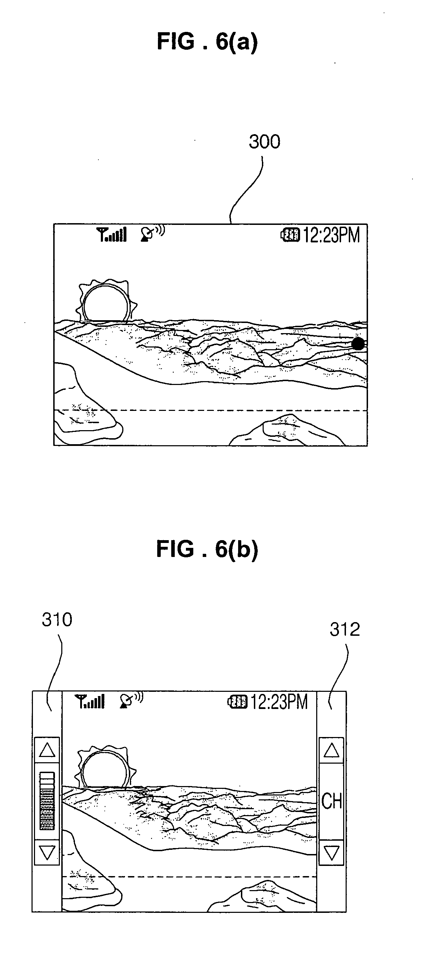

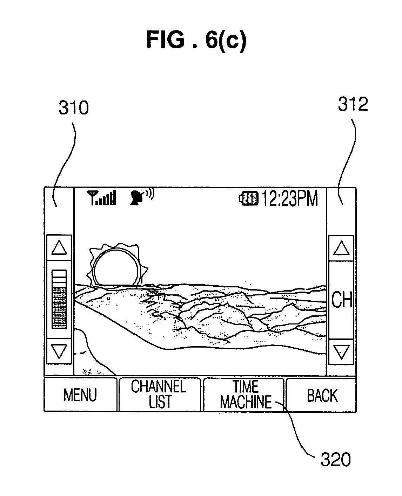

The above-mentioned operations/steps may be repeatedly performed and/or in different orders. In one example, when both the first and second operation control menus are displayed on the touch screen 120, a single additional touch to any area or a designated area of the touch screen 120 can cause both the first and second operation control menus to simultaneously disappear from the touch screen 120. In still another example, one touch to the touch screen 120 can cause multiple menus to simultaneously appear on the touch screen. In still another example, a third touch to the touch screen may cause a third operation control menu to appear on the touch screen and so on. Also, the first through fourth touches in the method of FIGS. 5 and 6 can be touches to predetermined areas of the touch screen 120, or can be touches to any part of the touch screen 120.

Accordingly, it is possible to effectively control the display of operation control menus on a touch screen so that the operation control menus can appear on or disappear from the touch screen in response to touch input(s) to the touch screen.

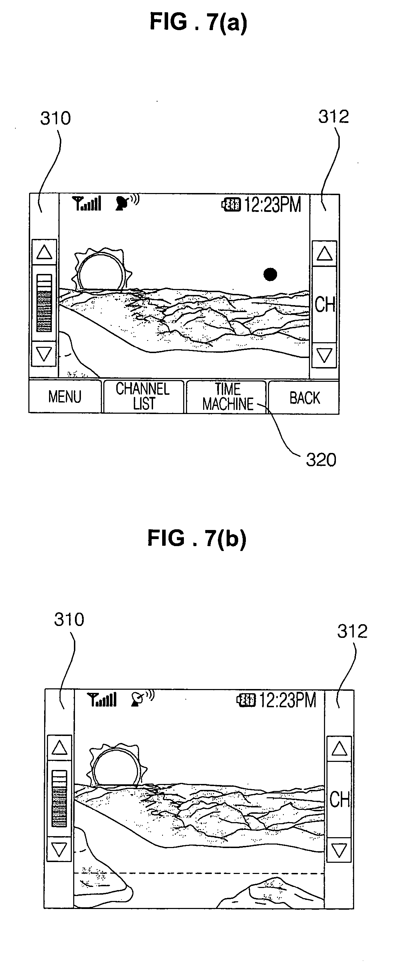

FIGS. 6(a)-6(c) and 7(a)-7(c) illustrate examples of touch screen images for explaining the method illustrated in FIGS. 4 and 5 according to an embodiment of the present invention. These images are preferably displayed on the touch screen 120, but can be displayed in other types of touch screen devices.

More specifically, FIG. 6(a) illustrates a touch screen image when a moving image 300 that is obtained by playing back, e.g., a DMB program, is displayed on a touch screen (e.g., touch screen 120) of a device. When a first touch input to the touch screen is detected when the moving image 300 is displayed on the touch screen, as illustrated in FIG. 6(a), first operation control menus 310 and 312 are respectively displayed on the left and right sides of the moving image 300, as illustrated in FIG. 6(b). The first operation control menus 310 and 312 may include a channel control menu and a volume control menu. Other types of menus are possible, e.g., 'next' and 'previous' icons if the images are picture clips. Then when a second touch input to the touch screen is detected, a second operation control menu 320 is displayed at the bottom of the moving image 300, as illustrated in FIG. 6(c). The second operation control menu 320 may include, but is not limited to, a menu for selecting functions, other than those provided by the first operation control menu 310, 312; a menu for providing a channel list; a menu for selecting a time machine function which allow users to continue watching TV, broadcast or images without pausing even when they receive an incoming phone call or are abruptly interrupted by recording broadcast programs in the memory unit 150 and playing the recorded programs back at a later time; and a menu for returning to previous menus. Other menus are possible.

FIGs. 7(a)-7(c) are examples of touch screen images for explaining how to make the first operation control menus 310 and 312 and the second operation control menu 320 disappear from the touch screen according to an embodiment of the present invention.

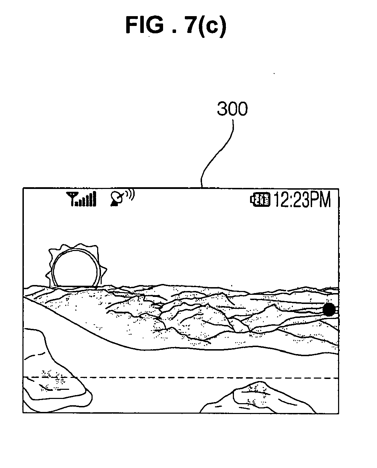

More specifically, when a touch input to the touch screen is detected when the first operation control menus 310 and 312 and the second operation control menu 320 are all displayed on the touch screen, as illustrated in FIG. 7(a), the second operation control menu 320 disappears from the touch screen, whereas the first operation control menus 310 and 312 remain on the touch screen, as illustrated in FIG. 7(b). Thereafter, when another touch input to the touch screen is detected, the first operation control menus 310 and 312 also disappear from the touch screen, as illustrated in FIG. 7(c). Even after the first operation control menus 310 and 312 and the second operation control menu 320 all disappear from the touch screen, they may be displayed again on the touch screen in response to a touch input to the touch screen.

In one example, to distinguish the touch input for selecting a menu item and the touch input for causing the displayed menu to disappear, the touch inputs for causing the displayed menu(s) to disappear may be made to portions of the touch screen, excluding the area(s) where the menu(s) are already displayed. For instance, in FIG. 7(a), if the user touches the menu 310 (e.g., the arrow icon), then the volume may increase, whereas if the user touches any part of the displayed scenery, then the second menu 320 may disappear as shown in FIG. 7(b). Other examples are possible.

In the above-mentioned examples, the first and second operation control menus are sequentially displayed on the left and right sides of and at the bottom of the touch screen 120 in response to touch inputs to arbitrary portion(s) of the touch screen 120. However, the present invention is not restricted to this. In other words, a first operation control menu may be displayed when a touch input to the left or right side of the touch screen 120 is detected, and a second operation control menu may be displayed when a touch input to the top or bottom of the touch screen 120 is detected. In the above-mentioned examples of the present invention, the second and first operation menu items displayed on the touch screen 120 are controlled to sequentially disappear in response to the third and fourth touch inputs, respectively, to the touch screen 120. However, the present invention is not restricted to this. For instance, the first and second operation control menus displayed on the touch screen 120 may disappear all at once in response to a single touch input to the touch screen 120.

As described above, according to the present invention, it is possible to control operation control menus to appear on or disappear from a touch screen on which a moving image or other information/data is displayed, in response to touch input(s) to the touch screen. Therefore, it is possible to efficiently control an operation of the mobile communication device using even a small-sized touch screen by making the operation control menus appear on or disappear from the touch screen, whenever necessary, in response to the touch input(s) to the touch screen.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method of controlling an operation of a mobile communication device equipped with a touch screen, the method comprising:
displaying an image on at least a portion of the touch screen;
if a first touch input to the touch screen is detected, displaying a first operation control menu in at least one first area on the touch screen; and
if a second touch input to the touch screen is detected, displaying a second operation control menu in a second area on the touch screen.

2. The method of claim 1, wherein at least one of the first and second operation control menus is a menu for controlling the image.

3. The method of claim 1, wherein the image is a moving image.

4. The method of claim 3, wherein the moving image is a moving image obtained by playing back a digital multimedia broadcast (DMB) program.

5. The method of claim 1, wherein the first operation control menu comprises at least one of a channel control menu and a volume control menu.

6. The method of claim 5, wherein the second operation control menu comprises at least one of a menu for selecting functions, a menu for providing a channel list, a menu for selecting a time machine function, and a menu for returning to previous menus.

7. The method of claim 1, further comprising:
if a third touch input to the touch screen is detected, making the first and second operation control menus disappear from the touch screen.

8. The method of claim 1, further comprising:
if a third touch input to the touch screen is detected, making the second operation control menu disappear from the touch screen.

9. The method of claim 8, further comprising:
if a fourth touch input to the touch screen is detected, making the first operation control menu disappear from the touch screen.

10. The method of claim 1, wherein the at least one first area is adjacent to a left or right boundary of the image, and the second area is adjacent to a lower boundary of the image.

11. The method of claim 1, wherein the at least one first area includes left and right side portions of the touch screen.

12. The method of claim 1, wherein the first touch input is a touch input to a portion of the touch screen near a left or right boundary of the image, and the second touch input is a touch input to a portion of the touch screen near a lower bottom of the image.

13. The method of claim 1, wherein at least one of the first and second touch inputs is a touch input to the image displayed on the at least the portion of the touch screen.

14. The method of claim 1, further comprising:
if a menu item is selected from the first or second operation control menu, performing an operation corresponding to the selected menu item.

15. The method of claim 1, further comprising:
making or receiving a call via a mobile communication network by selecting a menu item from the first or second operation control menu.

16. A mobile communication device comprising:
a touch screen; and
a control unit configured to display an image on at least a potion of the touch screen, to display a first operation control menu in at least one first area on the touch screen if a first touch input to the touch screen is detected, and to display a second operation control menu in a second area on the touch screen if a second touch input to the touch screen is detected.

17. The mobile communication device of claim 16, wherein at least one of the first and second operation control menus is a menu for controlling the image.

18. The mobile communication device of claim 16, wherein the image is a moving image.

19. The mobile communication device of claim 18, wherein the moving image is a moving image obtained by playing back a digital multimedia broadcast (DMB) program.

20. The mobile communication device of claim 16, wherein the first operation control menu comprises at least one of a channel control menu and a volume control menu.

21. The mobile communication device of claim 20, wherein the second operation control menu comprises at least one of a menu for selecting functions, a menu for providing a channel list, a menu for selecting a time machine function, and a menu for returning to previous menus.

22. The mobile communication device of claim 16, wherein, if a third touch input to the touch screen is detected, the control unit controls the first and second operation control menus to disappear from the touch screen.

23. The mobile communication device of claim 16, wherein, if a third touch input to the touch screen is detected, the control unit controls the second operation control menu to disappear from the touch screen.

24. The mobile communication device of claim 23, wherein, if a fourth touch input to the touch screen is detected, the control unit controls the first operation control menu to disappear from the touch screen.

25. The mobile communication device of claim 16, wherein the at least one first area is adjacent to a left or right boundary of the image, and the second area is adjacent to a lower boundary of the image.

26. The mobile communication device of claim 16, wherein the at least one first area includes left and right side portions of the touch screen.

27. The mobile communication device of claim 16, wherein the first touch input is a touch input to a portion of the touch screen near a left or right boundary of the image, and the second touch input is a touch input to a portion of the touch screen near a lower bottom of the image.

28. The mobile communication device of claim 16, wherein at least one of the first and second touch inputs is a touch,input to the image displayed on the at least the portion of the touch screen.

29. The mobile communication device of claim 16, wherein, if a menu item is selected from the first or second operation control menu, the control unit controls an operation corresponding to the selected menu item to be performed.

30. The mobile communication device of claim 16, further comprising:
a wireless communication unit configured to provide a communication function through a mobile communication network,
wherein, if a menu item for making or receiving a call is selected from the first or second operation control menu, the control unit controls the wireless communication unit to make or receive the call.

31. A method of controlling a display operation of a mobile terminal equipped with a touch screen, the method comprising:
displaying an image on the touch screen; and
controlling at least one of a size of the image and a control menu display according to a count of a touch action on the touch screen.

32. The method of claim 31, wherein if the size of the image is changed in the controlling step, the size of the image is changed back to the original size in response to two touch actions on the touch screen.

33. The method of claim 31, wherein the controlling step includes:
displaying at least one control menu on the touch screen according to at least one touch action on the touch screen.

34. The method of claim 33, wherein the at least one control menu is displayed on at least a bottom area of the touch screen.

35. The method of claim 34, wherein the at least one control menu displayed on the bottom area of the touch screen includes at least one icon to selectively pause the displaying of the image and playback the image on the touch screen.

36. The method of claim 33, wherein the displaying step displays a volume control menu on a designated area of the touch screen in response to a single touch action on the touch screen.

37. The method of claim 33, further comprising:
after the at least one control menu is displayed on the touch screen in the displaying step, determining whether or not a current touch action on the touch screen is on the area where the at least one control menu is displayed;
performing an operation associated with the at least one control menu according to the current touch action, if the determining step determines that the current touch action is on the area where the at least one control menu is displayed; and
removing the displayed at least one control menu from the touch screen, if the determining step determines that the current touch action is not on the area where the at least one control menu is displayed.

38. A mobile terminal comprising:
a touch screen; and
a controller configured to control at least one of a size of the image and a control menu display according to a count of a touch action on the touch screen.

39. The mobile terminal of claim 38, wherein if the size of the image is changed on the touch screen, the size of the image is changed back to the original size in response to two touch actions on the touch screen.

40. The mobile terminal of claim 38, wherein the controller is configured to display at least one control menu on the touch screen according to at least one touch action on the touch screen.

41. The mobile terminal of claim 40, wherein the at least one control menu is displayed on at least a bottom area of the touch screen.

42. The mobile terminal of claim 41, wherein the at least one control menu displayed on the bottom area of the touch screen includes at least one icon to selectively pause the displaying of the image and playback the image on the touch screen.

43. The mobile terminal of claim 40, wherein the at least one control menu displayed on the touch screen includes a volume control menu on a designated area of the touch screen in response to a single touch action on the touch screen.

44. The mobile terminal of claim 40, wherein, after the at least one control menu is displayed on the touch screen, the controller determines whether or not a current touch action on the touch screen is on the area where the at least one control menu is displayed, performs an operation associated with the at least one control menu according to the current touch action if the controller determines that the current touch action is on the area where the at least one control menu is displayed, and removes the displayed at least one control menu from the touch screen if the controller determines that the current touch action is not on the area where the at least one control menu is displayed.
